# EUROPÄISCHE PATENTANMELDUNG

(11) **EP 1 237 130 A1**
(43) Veröffentlichungstag der Anmeldung: **04.09.2002**
(21) Anmeldenummer: 01127509.6
(22) Anmeldetag: 17.11.2001
(51) Int. Cl.: G07F 17/16, G07F 19/00, G07F 7/02

(54) **Verfahren zum Durchführen einer bargeldlosen Finanztransaktion**

(30) Priorität: 26.07.2001 DE 10136080; 21.11.2000 DE 20019795 U
(71) Anmelder: Zint, Wolfgang, 50858 Köln (DE); Stolz, Volker, 45468 Mühlheim a. d. Ruhr (DE)
(72) Erfinder: Zint, Wolfgang, 50858 Köln (DE); Stolz, Volker, 45468 Mühlheim a. d. Ruhr (DE)
(74) Vertreter: COHAUSZ DAWIDOWICZ HANNIG & PARTNER

(57) **Zusammenfassung**

Die Erfindung betrifft ein Verfahren zum Durchführen einer bargeldlosen Finanztransaktion, insbesondere über das Internet (7,8,9), zwischen einem Kunden (3) und einem beliebigen Anbieter (5) von Waren und/oder Dienstleistungen, bei dem nach Überprüfung der Autorisierung des Kunden (3) mittels einer Telekommunikationseinrichtung und/oder -verbindung (8) im Rahmen der Finanztransaktion ein dem Kunden (3) zugeordnetes bei einem Kontenanbieter (1) geführtes Zahlungsmittelkonto (2), zugunsten des Anbieters (3) in Höhe eines vereinbarten Zahlungsmittelbetrages belastet wird, wobei ein Zahlungsmittelguthaben auf das Zahlungsmittelkonto (2) transferiert wird durch den Kauf einer das Zahlungsmittelguthaben repräsentierenden Guthabenkarte (Prepaid-Card) (6) und der Aktivierung/Entwertung (7) der Guthabenkarte (6) gegenüber dem Kontenanbieter (1), insbesondere mittels Telekommunikation (7).

## Beschreibung

Die Erfindung betrifft ein Verfahren zum Durchführen einer bargeldlosen Finanztransaktion, insbesondere über das Internet, zwischen einem Kunden und einem beliebigen Anbieter von Waren und/oder Dienstleistungen, bei dem nach Überprüfung der Autorisierung des Kunden mittels einer Telekommunikationseinrichtung und/oder-verbindung im Rahmen der Finanztransaktion ein dem Kunden zugeordnetes, bei einem Kontenanbieter geführtes Zahlungsmittelkonto zugunsten des Anbieters in Höhe eines vereinbarten Zahlungsmittelbetrages belastet wird.

Derartige bargeldlose Zahlungsverfahren sind allgemein bekannt und werden beispielsweise dort eingesetzt, wo ein Kunde in einem Kaufhaus eine Ware bargeldlos unter Zuhilfenahme beispielsweise seiner Eurocheque-Karte oder einer Kreditkarte bezahlen möchte. Der Kunde autorisiert sich gegenüber dem Anbieter, in diesem Fall einem Kaufhaus, durch Vorlage seiner Kreditkarte bzw. Eurocheque-Karte und gegebenenfalls Angabe einer sogenannten PIN-Nummer als verfügungsberechtigt über ein Zahlungsmittelkonto, welches üblicherweise als Girokonto bei einem Kreditinstitut als Kontenanbieter geführt wird.

Nach einer Überprüfung der Autorisierung des Kundens, die üblicherweise über eine Telekommunikationseinrichtung und/oder -verbindung durchgeführt wird und beispielsweise online mit einem Rechenzentrum oder direkt mit dem Kreditinstitut erfolgt, wird das Zahlungsmittelkonto, also das Girokonto in Höhe des vereinbarten Zahlungsmittelbetrages zugunsten des Anbieters belastet.

Diese bekannten Zahlungsmittelverfahren haben allesamt den Nachteil, dass nicht schon eine einfache Autorisierung ausreicht, um den bargeldlosen Zahlungsvorgang durchzuführen, sondern dass sich der Kunde gleichzeitig persönlich identifiziert und dem Anbieter, also beispielsweise einem Kaufhaus sicherheitsrelevante personenbezogene Daten bekannt werden. So erhält ein Anbieter von Waren und/oder Dienstleistungen bei den bekannten bargeldlosen Zahlungsverfahren eine Information über den Namen des Kunden sowie sämtliche Daten über die Girokontoverbindung. Dementsprechend kann ein Kunde bei einem bargeldlosen Zahlen einer Ware weder anonym bleiben noch seine Kontendaten geheim halten, so dass durch die Preisgabe der Kontendaten und Übermittlung der Daten über teilweise nicht abhörsichere Datenleitungen ein Missbrauch möglich ist.

Häufig ist sogar der Fall gegeben, dass die Person identifizierende Daten und Kontoverbindungen nicht nur über die Telekommunikationsverbindungen übermittelt werden und hierbei abgehört werden können, sondern dass beim Zahlungsvorgang Zahlungsbelege in mehrfacher Ausfertigung angefertigt werden, auf denen der Name des Kunden sowie die relevanten Kontendaten erscheinen, so dass ein Missbrauch dieser Daten für diejenigen Personen möglich ist, die Zugriff auf diese Durchschriftbelege haben, mithin also für das Kassenpersonal.

Auch aus dem Internetbereich ist es bekannt, dass ein Zahlungsvorgang durch Angabe einer Kreditkartennummer oder einer Kontoverbindung durchgeführt werden kann. Hier kann ein Kunde ebenfalls anhand der übermittelten Daten identifiziert werden und es besteht zudem die Gefahr eines Mißbrauches, wenn die Daten durch unberechtigte Dritte abgehört werden.

Aufgabe der Erfindung ist es, ein Verfahren für den bargeldlosen Zahlungsverkehr anzubieten, bei dem unter vollständiger Wahrung der Anonymität und ohne Preisgabe kontenbezogener oder personenbezogener Daten, und somit unter Einhaltung größtmöglicher Sicherheit, ein Kunde einen bargeldlosen Zahlungsverkehr mit beliebigen Anbietern von Waren und/oder Dienstleistungen durchführen kann.

Diese Aufgabe wird dadurch gelöst, dass auf ein Zahlungsmittelkonto, welches bei einem Kontenanbieter für einen Kunden geführt wird und auf das beliebige Anbieter von Waren und/oder Dienstleistungen im Rahmen einer bargeldlosen Zahlung Zugriff haben, ein Zahlungsmittelguthaben transferiert wird durch den Kauf einer das Zahlungsmittelguthaben repräsentierenden Guthabenkarte (Prepaid-Card) und der Aktivierung/Entwertung der Guthabenkarte gegenüber dem Kontenanbieter, insbesondere mittels Telekommunikation.

Die genannte Guthabenkarte kann beispielsweise bei beliebigen öffentlichen Verkaufsstellen entgeltlich erworben werden und repräsentiert ein Guthaben, welches üblicherweise dem Kaufpreis entspricht. Dementsprechend kann eine derartige Guthabenkarte mit Bargeld erworben werden, so dass bei dem Kauf einer Guthabenkarte weder Kontoinformationen noch die Identität eines Kunden preisgegeben werden. Schon bei dem Erwerb einer Guthabenkarte bleibt dementsprechend die Anonymität eines Kunden gewahrt.

Sodann besteht nach dem erfindungsgemäßen Verfahren die Möglichkeit, die Guthabenkarte zu aktivieren bzw. zu entwerten, mithin also das Guthaben praktisch auf das bei dem Kontenanbieter geführte Zahlungsmittelkonto zu transferieren. Dies erfolgt insbesondere über eine beliebige Telekommunikationsverbindung, beispielsweise über das Internet oder auch über eine Telefonverbindung.

Praktisch kann das Aufbuchen des Guthabens auf das Zahlungsmittelkonto dadurch erfolgen, dass eine das Zahlungsmittelkonto betreffende Autorisierungsinformation des Kontoinhabers und eine wenigstens das Zahlungsmittelguthaben repräsentierende Information, insbesondere über die genannte Telekommunikationsverbindung, an den Kontenanbieter übertragen wird, bei dem der Kunde sein Konto führen lässt. Hierbei ist die das Zahlungsmittelguthaben repräsentierende Information eine Information, die keinerlei Rückschluss auf den Kunden selbst zulässt, da diese Information lediglich die Guthabenkarte betrifft. Weiterhin kann gemäß dem erfindungsgemäßen Verfahren auch gewährleistet sein, dass die das Zahlungsmittelkonto und den Kunden, mithin also den Kontoinhaber betreffende Autorisierungsinformation derart gestaltet ist, dass auch hier eine Wahrung der Anonymität gewährleistet bleibt.

Die das Zahlungsmittelguthaben repräsentierende Information, also die Information, die eine Guthabenkarte identifiziert, kann sich zusammensetzen aus wenigstens einer Information über den Betrag des Guthabens und einer weiteren Information zur Verifizierung der Authentizität des Zahlungsmittelguthabens, eventuell auch einer Information über den Aussteller der Guthabenkarte, wobei es sich üblicherweise um den Kontenanbieter handelt.

So kann bei der Aktivierung/Entwertung der Guthabenkarte, also dem Vorgang zum Aufbuchen des Guthabens auf das Zahlungsmittelkonto gewährleistet sein, dass die Authentizität der Karte verifiziert werden kann, um hier einem Missbrauch vorzubeugen und zu gewährleisten, dass eine Karte lediglich ein einziges Mal verwendet werden kann.

Gemäß der Erfindung kann es auch vorgesehen sein, dass ein Kunde mehrere Zahlungsmittelkonten insbesondere gleichzeitig eröffnet bzw. unterhält. So kann beispielsweise für jede oder mit jeder Guthabenkarte eine neues Konto eröffnet werden.

Gemäß dem erfindungsgemäßen Verfahren kann bevorzugterweise das Zahlungsmittelkonto bei dem entsprechenden Kontenanbieter für einen Kontoinhaber durch Auswahl einer geeigneten Autorisierungsinformation eröffnet werden. Diese Autorisierungsinformation kann beispielsweise in einem von dem Kontoinhaber bzw. Kunden gewählten Benutzernamen und einem Passwort bestehen.

Dementsprechend braucht der Kunde und Kontoinhaber bei der Eröffnung seines Kontos keine Informationen über seine Identität, also beispielsweise seinen Namen und seine Adresse preisgeben. Die Eröffnung des Zahlungsmittelkontos kann bevorzugterweise auch über eine Telekommunikationsverbindung, insbesondere über das Internet erfolgen. So besteht die Möglichkeit, dass sich ein Kunde, der ein neues Konto eröffnen möchte, über das Internet auf die Webseite eines entsprechenden Kontenanbieters begibt und dort sein Konto anonym lediglich unter Angabe bzw. Auswahl eines Benutzernamens und eines Passwortes eröffnet. So werden weder beim Führen und Eröffnen eines Kontos noch beim Aufbuchen eines Guthabens mittels einer Guthabenkarte bei dem erfindungsgemäßen Verfahren personenidentifizierende Daten oder Daten die einen umfangreichen Kontomissbrauch ermöglichen bekannt gegeben.

Das Zahlungsmittelkonto kann also auch bei dem Kontenanbieter ohne eine die Persönlichkeit identifizierende Information über den Kunden geführt werden. Um diese Möglichkeit zu bieten, kann es entsprechend der gesetzlichen Lage eines betreffenden Landes nötig sein, die auf dem entsprechenden Zahlungsmittelkonto vorgehaltenen Zahlungsmittel auf einen in der Höhe maximalen Betrag zu begrenzen. Beispielsweise sieht in Deutschland das Gesetz über das Aufspüren von Gewinnen aus schweren Straftaten (Geldwäschegesetz) vor, dass Kreditinstitute die Identität eines Kunden feststellen müssen und darüber hinaus eine Identität auch bei Finanztransaktionen ab einer bestimmten Größenordnung überprüft werden muss.

Hiervon können jedoch Unternehmen im Einzelfall ausgenommen werden, so dass sich die grundsätzliche Möglichkeit ergibt, ein Zahlungsmittelkonto, insbesondere für geringwertige Beträge, auch anonym, ohne den Inhaber identifizierende Angaben zu führen. Sollte dies nicht möglich sein, so besteht zumindest lediglich die Notwendigkeit, den Kontoinhaber gegenüber dem Kontenanbieter zu identifizieren. Die Nötigkeit einer Identifizierung gegenüber anderen Dritten besteht hingegen nicht.

Hat sich nun ein Anbieter von Waren und/oder Dienstleistungen, beispielsweise ein Anbieter im Internet dem erfindungsgemäßen Zahlungsverfahren angeschlossen, so besteht für einen Kunden die Möglichkeit die Finanztransaktion, also z.B. die Belastung seines Guthabenkontos ohne Angabe seiner persönlichen Identität und Preisgabe von Informationen z.B. über sein eigentliches Giro-Konto durchzuführen.

Der Kunde braucht einem Anbieter lediglich die bei der Kontoeröffnung ausgewählte Autorisierungsinformation bekannt geben, um die bargeldlose Finanztransaktion durchzuführen. Es reicht also aus, beispielsweise lediglich einen Benutzernamen und ein Passwort dem Anbieter mitzuteilen, um sich zu autorisieren, wobei durch die Angabe des Benutzernamens und des Passwortes eine hinreichende Individualisierung des Kunden möglich ist und eine hohe Sicherheit gewährleistet bleibt.

Die Angabe der Autorisierungsinformationen kann hierbei bevorzugterweise auch über eine Telekommunikationsverbindung, also beispielsweise über das Internet erfolgen, so dass sich das erfindungsgemäße Zahlungsverfahren insbesondere für Zahlvorgänge im Internet eignet.

Zwar kann auch durch Kenntnis der Autorisierungsinformation ein Mißbrauch des Zahlungsmittelkontos erfolgen, der Schaden wäre jedoch nur sehr gering, da das Zahlungsmittelkonto bevorzugt ein reines Guthabenkonto ohne Kreditrahmen ist, von dem nur geringe Beträge verfügbar sind.

Vor dem Durchführen der Finanztransaktion besteht bevorzugterweise die Möglichkeit, dass der Anbieter die Autorisierung, ebenfalls insbesondere über eine Telekommunikationsverbindung, also z.B. über Internet zwischen dem Anbieter und dem Kontenanbieter verifiziert. Hierbei wird also beispielsweise überprüft, ob tatsächlich bei dem Kontenanbieter unter dem angegebenen Benutzernamen und dem zugehörigen Passwort ein entsprechendes Zahlungsmittelkonto existiert. Ist diese Existenz verifiziert, so kann es weiterhin vorgesehen sein, dass vor der Finanztransaktion auch die betragsmäßige Deckung des Zahlungsmittelkontos überprüft wird. Nur wenn eine Deckung des Zahlungsmittelkontos gegeben ist, wird auch die Finanztransaktion durchgeführt und der Kunde erhält die Ware bzw. die Dienstleistung, die er beispielsweise über das Internet zu bestellen wünscht.

Gegenüber bekannten Verfahren aus dem Stand der Technik hat das erfindungsgemäße Verfahren also den Vorteil, dass bei dem Wunsch, eine Ware oder Dienstleistung, insbesondere über das Internet, zu bezahlen, keine Informationen über den Kunden und eventuelle Konten preisgegeben werden müssen. Es reicht aus einen Benutzernamen und ein Passwort anzugeben, welches den Kunden ausreichend identifiziert und autorisiert. Selbst vor dem Hintergrund, dass ein Zahlungsmittelkonto bei einem Kontenanbieter nicht anonym, sondern nur unter Überprüfung der Identität des Kunden geführt werden kann, werden diese Informationen nicht an den Anbieter der Waren und Dienstleistungen weitergegeben. Diese Informationen verbleiben ausschließlich bei dem Kontenanbieter, so dass bei einem bargeldlosen Zahlungsvorgang mittels des erfindungsgemäßen Verfahrens zum einen die Anonymität des Kunden gewahrt bleibt und zum anderen keine Informationen übertragen werden, mittels derer ein Rückschluss auf ein normales Girokonto möglich ist, von dem eine nahezu betragsmäßig unbegrenzte Belastung durch nicht berechtigte Dritte möglich wäre.

Durch das insbesondere betragsmäßig begrenzte erfindungsgemäße Zahlungsmittelkonto, welches gemäß dem vorgenannten Verfahren mit Guthaben über Guthabenkarten aufgefüllt werden kann, kann also einem Kontenmissbrauch nachhaltig Einhalt geboten werden. Das erfindungsgemäße Zahlungsverfahren eignet sich dementsprechend besonders für Bezahlvorgänge im Internet, bei denen grundsätzlich davon ausgegangen werden muss, dass die übermittelten Daten durch Dritte nicht berechtigte Personen eingesehen werden können.

Um auch bei dem erfindungsgemäßen Verfahren weiterhin die Sicherheit noch zu erhöhen, kann auch bei der Übermittlung der Autorisierungsinformation vorgesehen sein, dass diese mittels weiterer Verschlüsselungstechniken übertragen werden.

Eine schematische Darstellung des erfindungsgemäßen Verfahrens ist in der nachfolgenden Abbildung dargestellt. Gemäß der Darstellung gibt es ein Zahlungsmittelkonto (2), welches bei einem Kontenanbieter (1)geführt wird. Dieses Konto (2) kann von einem Kontoinhaber (3) eröffnet werden, beispielsweise indem er sich über das Internet (7) auf die Webseite des Kontenanbieters (1) einwählt und dort einen Benutzernamen sowie ein Passwort auswählt. Lediglich unter Zuhilfenahme dieser Informationen wird das Konto (2) bei dem Kontenanbieter (1) geführt. Unter Umständen kann es gesetzlich vorgesehen sein, dass sich der Kunde (3) zumindest gegenüber dem Kontenanbieter (1) identifiziert, um das Konto (2) eröffnen zu können.

Bei dem erfindungsgemäßen Verfahren wird das Zahlungsmittelkonto (2) mit einem Zahlungsmittelguthaben aufgefüllt, indem der Kontoinhaber (3) und potentielle Kunde (3) zunächst bei einer beliebigen öffentlichen Verkaufsstellen, also beispielsweise an einem Kiosk oder einem sonstigen Geschäft eine Guthabenkarte (Prepaid-Card) (6), die einen bestimmten Guthabenbetrag repräsentiert, käuflich erwirbt. Der Wert der Guthabenkarte (6), der das Guthaben darstellt, kann hierbei beispielsweise auf der Karte selbst aufgedruckt sein. Um dieses Guthaben nun zu aktivieren, wählt sich der Kontoinhaber (3) z.B. über das Internet (9) auf die Webseite des Ausstellers und Kontenanbieters (1) der Guthabenkarte (6) ein. Unter Angabe seines zuvor gewählten Benutzernamens und des Passwortes identifiziert der Kunde (3) das Zahlungsmittelkonto (2), auf dem das Guthaben aufgebucht werden soll. Auf der Guthabenkarte (6) kann beispielsweise ein sogenanntes Rubbelfeld vorgesehen sein, das der Kunde und Konteninhaber (3) zunächst freizurubbeln hat, so dass darunter eine Geheimnummer erscheint, die für das Aufbuchen des Guthabens auf das Zahlungsmittelkonto (2) zu verwenden ist.

Praktisch sieht das Aufbuchen so aus, dass der Kunde und Kontoinhaber (3) die erhaltene Geheimnummer eventuell in Verbindung mit einer weiteren, auf der Karte abgebildeten Kartennummer im Internet (7) auf der Webseite des Kontenanbieters (1) eingibt, so dass der Kontenanbieter (1) zum einen die Authentizität der Karte überprüfen kann und anhand der Nummer den Guthabenbetrag ermittelt und diesen auf das Zahlungsmittelkonto (2) aufbucht. Nunmehr verfügt dementsprechend der Kontoinhaber (3) über ein Guthaben auf dem Zahlungsmittelkonto (2), welches durch Belastung bei Kaufvorgängen beliebigen Anbietern (5) von Waren und Dienstleistungen, insbesondere im Internet (9), angeboten werden kann.

Bei Einkäufen über das Internet (9) kann sodann ein Kunde (3) auf der Homepage (4) des jeweiligen Anbieters (5) die entsprechenden gewünschten Waren und Dienstleistungen sowie unter verschiedenen Zahlungsarten wählen. Sofern der Anbieter (5) und Betreiber (5) der Homepage (4) dem erfindungsgemäßen Zahlungsverfahren angeschlossen ist, kann der Kunde (3) dieses Zahlungsverfahren auswählen, so dass in diesem Moment eine Verlinkung (8) zum Kartenaussteller (1) bzw. Kontenanbieter (1) des Zahlungsmittelkontos (2) hergestellt wird. Der Kunde (3) beauftragt sodann über das Internet (9) aus seinem Guthaben auf dem Zahlungsmittelkonto (2) den zu zahlenden Betrag an den jeweiligen Betreiber (5) der Homepage (4) bzw. den Online-Dienstleister zu überweisen. Hierbei findet die Identifizierung und Autorisierung lediglich über den Usernamen und das erwähnte Passwort statt.

Nachdem der Benutzername und das Passwort auf der Homepage (4) des Anbieters (5) eingegeben wurden, verifiziert dieser die angegebenen Daten durch eine Verlinkung (8) zu dem Kontenanbieter (1), um festzustellen, ob tatsächlich ein Konto (2) unter diesem Benutzernamen und dem Passwort existiert. Weiterhin kann hierbei die Deckung des Kontos überprüft werden, so dass die Bereitstellung der Waren bzw. Dienstleistung im Internet erst erfolgt, wenn eine Verifikation gegeben ist.

Das erfindungsgemäße Zahlungsverfahren bietet einem Kunden (3), insbesondere bei der Benutzung im Internet (9), absolute Anonymität, da keine Namen oder andere sicherheitsrelevante Daten übermittelt werden müssen und darüber hinaus größtmögliche Sicherheit, da Zahlungsverfügungen lediglich von einem Konto (2) erfolgen, welches nur bis zu einem maximalen Betrag belastbar ist, da dieses Konto (2) keinen Kreditrahmen aufweist. Das entsprechende Konto (2) kann auf Anforderung immer wieder mit neuem Guthaben durch den Kauf und die Aktivierung/Entwertung von Guthabenkarten (6) gefüllt werden.

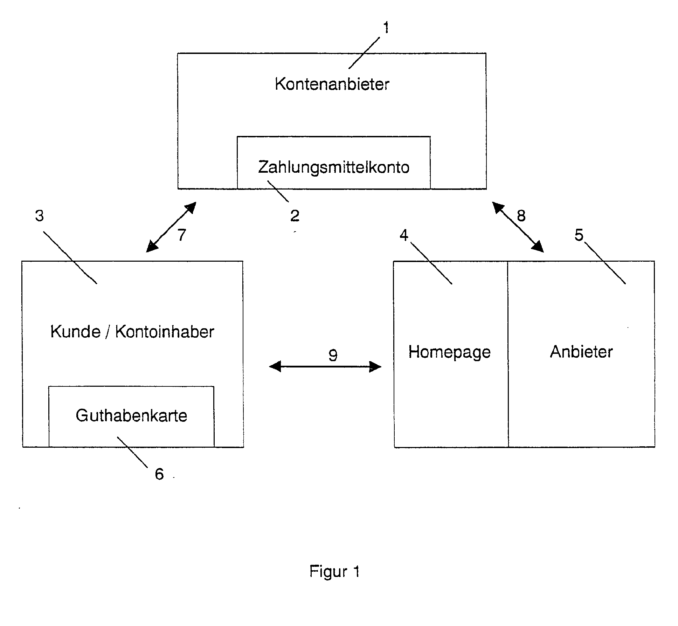

## Patentansprüche

1. Verfahren zum Durchführen einer bargeldlosen Finanztransaktion, insbesondere über das Internet (7,8,9), zwischen einem Kunden (3) und einem beliebigen Anbieter (5) von Waren und/oder Dienstleistungen, bei dem nach Überprüfung der Autorisierung des Kunden (3) mittels einer Telekommunikationseinrichtung und/oder -verbindung (8) im Rahmen der Finanztransaktion ein dem Kunden (3) zugeordnetes bei einem Kontenanbieter (1) geführtes Zahlungsmittelkonto (2), zugunsten des Anbieters (5) in Höhe eines vereinbarten Zahlungsmittelbetrages belastet wird, **dadurch gekennzeichnet, dass** ein Zahlungsmittelguthaben auf das Zahlungsmittelkonto (2) transferiert wird durch den Kauf einer das Zahlungsmittelguthaben repräsentierenden Guthabenkarte (Prepaid-Card) (6) und der Aktivierung/Entwertung der Guthabenkarte (6) gegenüber dem Kontenanbieter (1), insbesondere mittels Telekommunikation (7).

2. Verfahren nach Anspruch 1, **dadurch gekennzeichnet, dass** die Aktivierung/Entwertung der Guthabenkarte (6) dadurch erfolgt, dass an den Kontenanbieter (1), insbesondere über eine Telekommunikationsverbindung (7), eine das Zahlungsmittelkonto (2) betreffende Autorisierungsinformation des Kontoinhabers (3) und eine wenigstens das Zahlungsmittelguthaben repräsentierende Information übertragen wird.

3. Verfahren nach Anspruch 2, **dadurch gekennzeichnet, dass** die das Zahlungsmittelguthaben repräsentierende Information sich wenigstens zusammensetzt aus einer Information über den Betrag des Guthabens und einer Information zur Verifizierung der Authentizität des Zahlungsmittelguthabens.

4. Verfahren nach einem der vorherigen Anspüche, **dadurch gekennzeichnet, dass** ein Zahlungsmittelkonto (2) beim Kontenanbieter (1) für einen Kontoinhaber (3) durch Auswahl einer Autorisierungsinformation, insbesondere eines Benutzernamens und eines Passwortes, eröffnet wird.

5. Verfahren nach Anspruch 4, **dadurch gekennzeichnet, dass** die Eröffnung des Zahlungsmittelkontos (2) über eine Telekommunikationsverbindung (7), insbesondere über das Internet (7) erfolgt.

6. Verfahren nach einem der vorherigen Anspüche, **dadurch gekennzeichnet, dass** sich der Kunde (3) dem Anbieter (5) gegenüber ohne Angabe seiner persönlichen Identität zur Durchführung der Finanztransaktion autorisiert.

7. Verfahren nach einem der vorherigen Anspüche, **dadurch gekennzeichnet, dass** das Zahlungsmittelkonto (2) bei einem Kontenanbieter (1) ohne die Persönlichkeit identifizierende Informationen über den Kunden/Konteninhaber (3) geführt wird.

8. Verfahren nach einem der vorherigen Anspüche, **dadurch gekennzeichnet, dass** auf dem Zahlungsmittelkonto (2) Zahlungsmittel in Höhe eines maximalen vorgegebenen Betrages vorgehalten werden.

9. Verfahren nach einem der vorherigen Anspüche, **dadurch gekennzeichnet, dass** sich der Kunde (3) gegenüber dem Anbieter (5) durch Angabe einer Autorisierungsinformation autorisiert.

10. Verfahren nach Anspruch 9, **dadurch gekennzeichnet, dass** vor der Finanztransaktion der Anbieter (5) die Autorisierung, insbesondere über eine Telekommunikationsverbindung (8) zwischen Anbieter (5) und Kontenanbieter (1) verifiziert.

11. Verfahren nach Anspruch 9 oder 10, **dadurch gekennzeichnet, dass** vor der Finanztransaktion die betragsmäßige Deckung des Zahlungsmittelkontos, insbesondere über eine Telekommunikationsverbindung (8) zwischen Anbieter (5) und Kontenanbieter (1), verifiziert wird.

12. Verfahren nach einem der vorherigen Anspüche, **dadurch gekennzeichnet, dass** die Autorisierung und/oder Verifizierung durch Angabe eines Benutzernamens und eines Passwortes erfolgt.

13. Verfahren nach einem der vorherigen Anspüche, **dadurch gekennzeichnet, dass** bei der Übertragung von Informationen mittels einer Telekommunikationsverbindung, insbesondere dem Internet (7,8,9), Verfahren zur Verschlüsselung der Informationen eingesetzt werden.

14. Verwendung einer Guthabenkarte (Prepaid-Card) (6) zum Transferieren eines Zahlungsmittelguthabens auf ein Zahlungsmittelkonto (2), **dadurch gekennzeichnet, dass** Finanztransaktionen zwischen dem Zahlungsmittelkonto (2) und beliebigen Anbietern (5) von Waren und/oder Dienstleistungen durchführbar sind.
